# EUROPEAN PATENT SPECIFICATION

(11) **EP 0 845 205 B1**
(45) Date of publication and mention of the grant of the patent: **08.03.2000**
(21) Application number: 97307071.7
(22) Date of filing: 11.09.1997
(51) Int. Cl.: A01K 1/015, A01K 1/035, A47C 27/00

(54) **Knit cellular cattle mattress fabric**
Strickwaren für zellulare Viehmatratze
Etoffe tricot pour matelas cellulaire pour bétail

(30) Priority: 28.10.1996 US 742608; 10.01.1997 US 781232
(43) Date of publication of application: 03.06.1998
(73) Proprietor: Milliken & Company, Spartanburg, SC 29304 (US)
(72) Inventor: Parker, Norman Marion, IV, LaGrange, GA 30240 (US); Dodson, Robert W., LaGrange, Georgia 30240 (US)
(74) Representative: Pacitti, Pierpaolo A.M.E.

(56) References cited:
- WO-A-86/00781
- WO-A-94/15452
- GB-A- 2 244 000
- GB-A- 2 262 034
- US-A- 3 270 696
- US-A- 5 247 893

## Description

This invention relates to an animal mattress which is particularly intended operatively to be disposed on a concrete or other hard floor within a barn or the like and on which, for example, cows may lie.

After feeding, cows traditionally lie down in the pasture while chewing the cud, and there has hitherto been the problem that during severe winter weather and other periods of inclement weather when the cows are kept in a barn or similar structure the cows are uncomfortable and are not contented when lying down on a concrete or similarly hard floor of the barn. Furthermore, cows nowadays are typically being kept permanently in a barn or similar structure irrespective of the weather conditions. With the view to alleviating this problem, various solutions have hitherto been proposed to render the feel of the concrete or similar hard floor of the barn more akin to that of the pasture. Thus, for example, it has previously been proposed to provide on the floor of the barn bedding materials such as straw, peanut hulls, saw dust, ground paper, sand or other items available on which the cow lies down. This arrangement has not been fully satisfactory because even when contained in a conventional bag, movement of the cow tends to push the bedding materials within the bag from under the cow. In an alternative proposed solution an unrestrained layer of shredded crumb rubber from used vehicle tires has been located on the floor in the stall of the barn with a blanket secured over this layer of crumb rubber and with the cow then lying on top of the blanket. While such a layer of comminuted rubber provides, from the standpoint of the cow, a degree of resiliency and feel which is very similar to that of the pasture, this alternative solution again suffers from the disadvantage that movement of the cow results in the comminuted rubber being displaced from under the cow so that the advantages of the cow lying on the layer of comminuted rubber are no longer achieved.

An alternative arrangement can be seen in WO-A-94/15452, which discloses an animal mattress formed from upper and lower fabric layers which are joined at transversely extending dividing seams to create separate compartments, the compartments being filled with comminuted rubber.

It is a primary object of the present invention to provide an animal mattress which is operatively disposed on the floor in the stall of a barn and which achieves the advantage of the abovementioned alternative arrangement comprising a layer of comminuted rubber that the cow lying thereon has a level of comfort comparable to that provided by the pasture, while obviating or mitigating the above-described disadvantage of the previously proposed arrangements.

It is to be emphasised that an animal mattress according to the present invention is not restricted in use to cows lying thereon, and the mattress may be used for other cattle and horses to lie thereon. Furthermore, an animal mattress according to the present invention may also advantageously be used on the floor of, for example, a hog breeding area.

The first aspect of the present invention is directed to an animal mattress in accordance with Claim 1. The second aspect of the present invention is directed to a method of making an animal mattress in accordance with Claim 7.

Preferred embodiments provide an animal mattress comprising a fabric enclosure having a plurality of separate compartments within the enclosure. Comminuted resiliently deformable material is disposed within each of the compartments.

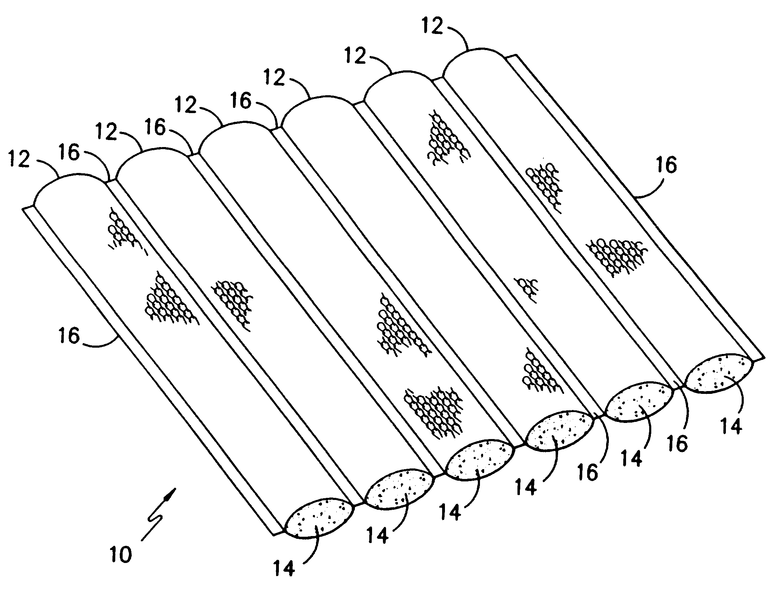

In order that the invention may be more clearly understood and more readily carried into effect the same will now, by way of example, be more fully described with reference to the accompanying drawing in which Fig 1 is an isometric view of an animal mattress according to a preferred embodiment of the invention.

Looking now to the drawing, the reference number 10 represents a cattle mattress comprised of a series of tubes 12 filled with crumb rubber 14 to provide comfort to the animal lying thereon. The The mattress is a double needle bar warp knit fabric with tubes 12 being formed from independent top and bottom layers joined at intervals 16 across the width of the fabric. The ends of the tubes 12 are sealed in conventional manner by sewing or heat sealing.

As mentioned above, the basic fabric is a five bar Raschel double needle bar warp knit fabric of nylon, polyester or polypropylene multi-filament yarns in the denier range of 100 - 400 with 10 - 40 courses per inch and 10 - 30 wales per inch.

In the preferred form of the invention, the upper portion of the tubes 12 is knit on bars 1 and 2 with a stitch formation, respectively, of 45/22/10/22 and 01/11/10/00 of polyester yarn with the yarn on bar one being 150 denier and the yarn on bar 2 being 300 denier. The lower portion of the tube is knit on bars 5 and 6 with a stitch formation respectively of 00/01/11/10 and of 22/45/22/10 using polyester yarn, respectively of 300 denier and 150 denier. The single ply area 16 of polyester yarn has a stitch formation of 01/10/10/01 knit on either bar 3 or 4 of 150 denier yarn. The basic fabric has 17 wales per inch and 30 courses per inch.

The fabric is shipped in its knit form to a customer where it will be cut to length and have one end of each tube closed by sewing, etc.. The crumb rubber will then be inserted into the tubes 12 at the other end and then this end will be closed to provide a self-contained animal mattress. The mattresses are placed in the stall area of the animal housing and then covered with a heavy textile cover.

It has been found that mattresses of this nature provide comfort which, in the case of cows, will result in an increase in milk production. Furthermore, the described mattress results in less waste handling time and aids in keeping animals cleaner and healthier.

Although we have described in detail the preferred embodiment of the invention, it is contemplated that changes may be made without departing from the scope or spirit of the invention and one desired to be limited only by scope of the claims.

## Claims

1. An animal mattress (10) comprising a fabric having tubes (12) formed from independent top and bottom layers joined at intervals (16) across the width of the fabric, soft shredded compound material (14) in said formed tubes (12) and means closing the ends of said tubes (12) to prevent the escape of the shredded material (14),
characterised in that said fabric is a warp knit fabric.

2. The mattress of Claim 1 wherein said fabric is a double needle bar warp knit fabric.

3. The mattress of Claim 1 or Claim 2 wherein said shredded compound material (14) is crumb rubber.

4. The mattress of any preceding Claim wherein said fabric is a five bar fabric.

5. The mattress of any preceding Claim wherein said knit fabric is substantially all polyester.

6. The mattress of any preceding Claim wherein said knit fabric has a stitch formation of 45/22/10/22, 01/11/10/00, 01/10/10/01, 00/01/11/10, 22/45/22/10.

7. A method of making an animal mattress (10) comprising the steps of: knitting a fabric having independent top and bottom layers joined at intervals (16) across the width, closing off one end of each tube (12), filling each tube (12) with crumb rubber (14) and closing off the other end of each tube (12) to prevent the escape of crumb rubber (14) from the tubes (12),
characterised in that the knitting of said fabric is warp knitting.

8. The method of Claim 7 wherein the fabric is a double needle bar warp knit fabric.

9. The method of Claims 7 or 8 wherein the fabric is knit on five bars of a warp knitting machine.

10. The method of any of Claims 7 to 9 wherein the fabric is knit with a stitch formation of 45/22/10/22, 01/11/10/00, 01/10/10/01, 00/01/11/10, 22/45/22/10.

## Patentansprüche

1. Eine Matratze für Tiere (10) bestehend aus einem Gewebe mit Röhren (12), die aus unabhängigen oberen und unteren Schichten gebildet sind, welche in Abständen (16) entlang der Breite des Gewebes miteinander verbunden sind, sanftem zerfasertem Verbundstoff (14) in den gebildeten Röhren (12) und Mitteln zum Verschließen der Enden dieser Röhren (12), um das Austreten von zerfasertem Stoff (14) zu verhindern, dadurch gekennzeichnet, daß das Gewebe ein Kettstuhlgewebe ist.

2. Matratze gemäß Anspruch 1, wobei das Gewebe ein zweifonturiges Kettstuhlgewebe ist.

3. Matratze gemäß Anspruch 1 oder Anspruch 2, wobei der zerfaserte Verbundstoff (14) krümeliger Gummi ist.

4. Matratze gemäß einem der vorhergehenden Ansprüche, wobei das Gewebe ein fünffonturiges Gewebe ist.

5. Matratze gemäß einem der vorhergehenden Ansprüche, wobei das Gewirk im wesentlichen vollständig aus Polyester besteht.

6. Matratze gemäß einem der vorhergehenden Ansprüche, wobei das Gewirk eine Stichbildung von 45/22/10/22, 01/11/10/00, 01/10/10/01, 00/01/11/10, 22/45/22/10 aufweist.

7. Ein Verfahren zur Herstellung einer Matratze für Tiere (10) bestehend aus den folgenden Schritten: Wirken eines Gewebes mit in Abständen (16) entlang der Breite verbundenen, unabhängigen oberen und unteren Schichten, Verschließen eines Endes jeder Röhre (12), Füllen jeder Röhre (12) mit krümeligem Gummi (14) und Verschließen des anderen Endes jeder Röhre (12), um das Austreten von krümeligem Gummi (14) aus den Röhren (12) zu verhindern,
dadurch gekennzeichnet, daß das Wirken des Gewebes Kettenwirken ist.

8. Verfahren gemäß Anspruch 7, wobei das Gewebe ein zweifonturiges Kettstuhlgewebe ist.

9. Verfahren gemäß Anspruch 7 oder 8, wobei das Gewebe auf fünf Nadelbarren einer Kettenwirkmaschine gewirkt wird.

10. Verfahren gemäß einem der Ansprüche 7 bis 9, wobei das Gewebe mit einer Stichbildung von 45/22/10/22, 01/11/10/00, 01/10/10/01, 00/01/11/10, 22/45/22/10 gewirkt wird.

## Revendications

1. Un matelas pour animal (10) comprenant un tissu présentant des tubes (12) formés à partir de couches supérieure et inférieure indépendantes jointes à intervalles (16) sur toute la largeur du tissu, du matériau composé et doux coupé en morceaux (14) dans lesdits tubes formés (12) et des moyens fermant les extrémités des dits tubes (12) afin d'empêcher le matériau coupé en morceaux (14) de s'échapper,
caractérisé en ce que ledit tissu est un tissu tricoté chaîne.

2. Le matelas de la revendication 1 dans lequel ledit tissu est un tissu tricoté chaîne à double barre à aiguilles.

3. Le matelas de la revendication 1 ou la revendication 2 dans lequel ledit matériau composé coupé en morceaux (14) est du caoutchouc granuleux.

4. Le matelas selon n'importe quelle revendication précédente dans lequel ledit tissu est un tissu à cinq barres.

5. Le matelas selon n'importe quelle revendication précédente dans lequel ledit tissu tricoté est considérablement tout en polyester.

6. Le matelas selon n'importe quelle revendication précédente dans lequel ledit tissu tricoté présente une formation de mailles de 45/22/10/22, 01/11/10/00, 01/10/10/01, 00/01/11/10, 22/45/22/10.

7. Un procédé de fabrication d'un matelas pour animal (10) comprenant les étapes consistant : à tricoter un tissu présentant des couches supérieure et inférieure indépendantes jointes à intervalles (16) sur toute la largeur, à fermer une extrémité de chaque tube (12), à remplir chaque tube (12) de caoutchouc granuleux (14) et à fermer l'autre extrémité de chaque tube (12) afin d'empêcher le caoutchouc granuleux (14) de s'échapper des tubes (12),
caractérisé en ce que le tricotage du dit tissu est le tricotage sur métier chaîne.

8. Le procédé de la revendication 7 dans lequel le tissu est un tissu tricoté chaîne à double barre à aiguilles.

9. Le procédé de la revendication 7 ou 8 dans lequel le tissu est tricoté sur cinq barres d'une machine à tricoter chaîne.

10. Le procédé selon n'importe quelle revendication 7 à 9 dans lequel le tissu est tricoté avec une formation de mailles de 45/22/10/22, 01/11/10/00, 01/10/10/01, 00/01/11/10, 22/45/22/10.
